(19) Europäisches Patentamt
European Patent Office
Office européen des brevets

(11) EP 0 907 476 B1

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.$^7$: **B29B 13/02**, B29B 13/04
// B29L7:00

(21) Anmeldenummer: **97925048.7**

(22) Anmeldetag: **05.06.1997**

(86) Internationale Anmeldenummer:
**PCT/EP97/02921**

(87) Internationale Veröffentlichungsnummer:
**WO 97/047449 (18.12.1997 Gazette 1997/54)**

(54) **BELÜFTUNGSDÜSE**

BLOWER NOZZLE

BUSE DE VENTILATION

(84) Benannte Vertragsstaaten:
**BE CH DE FR GB IT LI**

(30) Priorität: **12.06.1996 DE 19623471**

(43) Veröffentlichungstag der Anmeldung:
**14.04.1999 Patentblatt 1999/15**

(73) Patentinhaber: **Brückner Maschinenbau GmbH**
**83313 Siegsdorf (DE)**

(72) Erfinder:
• **KITTSTEINER, Hans-Jürgen**
**D-83324 Ruhpolding (DE)**
• **MAETZE, Michael**
**D-83364 Neukirchen (DE)**

(74) Vertreter: **Flach, Dieter Rolf Paul, Dipl.-Phys. et al**
**Andrae Flach Haug**
**Adlzreiterstrasse 11**
**83022 Rosenheim (DE)**

(56) Entgegenhaltungen:
EP-A- 0 377 311    DE-C- 3 642 710
DE-C- 3 704 910    US-A- 4 170 075
US-A- 4 347 960

• **PATENT ABSTRACTS OF JAPAN vol. 9, no. 121 (M-382), 25.Mai 1985 & JP 60 008037 A (MITSUBISHI JUKOGYO K.K.), 16.Januar 1985, & DATABASE WPI Section Ch, Week 8509 Derwent Publications Ltd., London, GB; Class AF, AN 85-052284 (09) & JP 60 008 037 A (MITSUBISHI HEAVY IND. CO. LTD.) , 16.Januar 1985**

• **PATENT ABSTRACTS OF JAPAN vol. 16, no. 440 (M-1310), 14.September 1992 & JP 04 153011 A (SEKISUI CHEM. CO. LTD.), 26.Mai 1992, & DATABASE WPI Section Ch, Week 9227 Derwent Publications Ltd., London, GB; Class AP, AN 92-224016 (27) & JP 04 153 011 A (SEKISUI CHEM. IND. CO. LTD.) , 26.Mai 1992**

**Beschreibung**

Die Erfindung betrifft eine Belüftungsdüse gemäß dem Oberbegriff des Anspruches 1.

Derartige Belüftungsdüsen dienen beispielsweise zum Aufheizen oder Abkühlen von bahnförmigen Materialien, insbesondere bei der Kunststofffolien-Herstellung. Die Belüftungsdüse ist dabei quer, d.h. in der Regel senkrecht zur Abzugsrichtung der Materialbahn und damit quer zur Bahnlaufrichtung ober- und/oder unterhalb der Materialbahn angeordnet.

Die Gleichmäßigkeit des Ausströmens ist für den Folienprozeß besonders wichtig, da eine ungleichmäßige Erwärmung der Kunststoffolie während der Verarbeitung negative Auswirkungen auf das Dickenprofil haben kann. Geringfügig wärmere Bereiche werden nämlich stärker gestreckt und damit dünner, als relativ kältere Kunststoffolienbereiche, die dann einen etwas dickeren Folienquerschnitt erhalten. Eine ungleichmäßige Erwärmung oder Kühlung der Folie führt aber auch zu einer Verschlechterung der Planlage des Endprodukts.

Besonders entscheidend ist die gleichmäßige Belüftung für die Herstellung von Ultradünnfilmen oder -folien, deren Folienstärke bis auf ca. 0,4 μm abnehmen kann.

Zur Vergleichmäßigung der Ausströmgeschwindigkeit, zur Erhitzung oder Kühlung von bahnförmig durchlaufenden Materialien, insbesondere Kunststoffolienbahnen, sind bereits unterschiedliche Vorschläge gemacht worden. Gemäß der EP-A1-0 377 311 wird eine Belüftungsdüse vorgeschlagen, die zwei nebeneinandersitzende und sich quer zur Abzugsrichtung der Materialbahn erstreckende Zuführkammern aufweisen, die jeweils gegenüberliegend mit einer Zuführöffnung für das Heizgas oder die Heizluft versehen sind, und die an ihrem jeweiligen gegenüberliegende Ende verschlossen sind. Der Querschnitt der jeweiligen Zuführkammer nimmt von der Zuführöffnung zum gegenüberliegenden verschlossenen Ende in Seitenansicht parallel zur Abzugsrichtung der Kunststoffolienbahn keilförmig ab. Unterhalb der beiden nebeneinander angeordneten Zuführkammern sitzt dann eine Verteilkammer, so daß das gegenüberliegende stirnseitig über die Zuführkammern einströmende Heißgas dann über zwischen den beiden Zuführkammern und der Verteilkammer angeordnete Uberstromöffnungen im wesentlichen quer zur Ebene der Materialbahn in die Verteilkammer gelangen und von dort über untentliegende Austrittsöffnungen mit Querrichtung quer zur Kunststoffolienbahn austreten kann.

Da also zur Mittellängsrichtung der Kunststofffolienbahn zwei symmetrisch gegenüberliegende Zuführkammern vorgesehen sind, kann, wenn auch keine gleichmäßige, so doch zumindest eine zum Querschnitt der Kunststofffolienbahn (also quer zur Abzugsrichtung derselben) symmetrische Druckgleichverteilung erzielt werden, damit die Kunststofffolienbahn über die gesamte Breite der Belüftungsdüse möglichst gleichmäßig mit Luft oder Gas angeblasen werden kann.

Allerdings erfordert dies einen erhöhten Aufwand, da zwei Zuführkanäle vorgesehen sind, die jeweils an gegenüberliegenden Seiten, also an beiden Seiten der fortbewegten Materialbahn über jeweils eine separate Zuführöffnung mit Heiz- oder Kühlgas (in der Regel Luft) versorgt werden muß. Dies führt aber zu einer schlechteren Zugänglichkeit der Belüftungsdüse insbesondere dann, wenn sie in einem Ofen eingebaut ist.

Ein im wesentlich zweigeteilter Furnierbahn-Trockner ist beispielsweise aus der DE 30 35 417 A1 bekannt geworden. Der Düsenkasten umfaßt eine schräg von unten nach oben verlaufende und mit Löchern versehene Lochplatte, die den Düsenkasten in einen Druckraum und einen Saugraum unterteilt, wobei der Saugraum mit der Ansaugseite und der Druckraum über die Druckseite mit Umwälzventilatoren in Verbindung steht. Auch ein derartiger Furnierbahn-Trockner führt nicht zu der erwünschten, völlig gleichmäßigen Verteilung und/oder gleichmäßigen Gasaustrittsgeschwindigkeit des zugeführten Heißgasstromes über die gesamte Düsenkastenlänge.

Bei der aus der DE 37 04 910 C1 bzw. der DE 36 26 171 C1 bekannten Blaseinrichtung zum Aufblasen eines Behandlungsmediums auf eine in Längsrichtung bewegte Materialbahn ist lediglich eine einzige Kammer vorgesehen, die gleichzeitig als Zuführ- und Verteilkammer dient. Um an beiden gegenüberliegenden stirnseitigen Zuführöffnungen Heizgas von lediglich einer Seite der Materialbahn zuführen zu können, wird über einen separaten Zuführkanal ein Teil des Heizgases über den zusätzlichen Zuführkanal zur gegenüberliegenden stirnseitigen Anschlußöffnung der Verteilkammer zugeführt und in die Verteilkammer eingeleitet.

Ein entsprechendes Prinzip für einen Düsenkasten für eine Vorrichtung zur Wärmebehandlung von Warenbahnen, insbesondere Textilbahnen, ist insoweit auch aus der DD 253 666 A1 bekannt geworden.

Schwebedüsen sind beispielsweise aus den US-Patentschriften US 5,156,312 und 5,395,029 bekannt geworden. Von einer Zuführkammer kann das Medium über zwei seitliche Steuerkammern nach oben hin in Richtung der vorbegeführten zu behandelnden Materialbahn austreten, wobei die einzelnen seitlichen Steuerkammern so geöffnet oder geschlossen werden können, daß eine Luftströmung in Richtung der Abzugsrichtung der zu behandelnden Materialbahn, eine Strömungsrichtung in entgegengesetzter Richtung dazu, oder eine symmetrische Strömungsrichtung insoweit erzeugt werden kann, daß teilweise das ausströmende Gas in Abzugsrichtung der Materialbahn und in entgegengesetzter Richtung umgelenkt wird.

Eine gattungsbildende Vorrichtung ist aus der DE 36 42 710 C1 bekannt geworden. Gemäß dieser Vorveröffentlichung werden verschiedene Ausführungsbeispiele beschrieben, denen jedoch gemeinsam ist, dass in Düsenkanälen jeweils eine sogenannte Zwischenwand zu einem Überströmkanal vorgesehen ist. Zumindest auf der Zuführseite des Mediums und auf einer dazu entgegengesetzt liegenden Seite des Mediums ist diese Zwischenwand mit Austrittsöffnungen versehen.

Gemäß der US 4 170 075 A wird ein Belüftungsdüsenaufbau beschrieben, bei welchem über einen Motor ein Luftstrom erzeugt wird, der über einen ersten Vertikalenkanal in einen horizontal liegenden Verteilkanal strömt. Von diesem Verteilkanal gelangt der Luftstrom in oben und unten liegende Druckverteilkammern.

Schließlich ist aus der DE 38 15 211 C2 der Aufbau einer Schwebedüse mit mehreren Kammern bekannt geworden, welche konstruktiv bedingt allerdings dazu führt, daß die Warenbahn W im Querschnitt wellig zwischen den Austrittsdüsen zu liegen kommt. Eine derartige Schwebedüse ist insbesondere bei der Herstellung von Kunststoffolienbahnen, die über seitlich an der Kunststoffolienbahn angreifenden Kluppen fortbewegt und gegebenenfalls in Längs- und/oder Querrichtung gereckt wird, nicht verwendbar.

Aufgabe der vorliegenden Erfindung ist es von daher, eine vergleichsweise einfach aufgebaute Belüftungsdüse zur Be handlung, insbesondere Erwärmung und/oder Kühlung bahnförmig durchlaufender Materialien zu schaffen, die eine gleichförmige Verteilung und/oder gleichmäßige Austrittsgeschwindigkeit des zugeführten Behandlungsmediums (in der Regel Heiß- oder Kühlluftstromes) über die gesamte Düsenkastenlänge, d.h. über die gesamte Breite der fortbewegten Materialbahn ermöglicht.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird auf verblüffend einfache Art und Weise eine Belüftungsdüse geschaffen, die eine deutlich verbesserte gleichförmige Verteilung bzw. gleichmäßige Gasaustrittsgeschwindigkeit aus dem Düsenkasten in den umgebenden Wirkraum gewährleistet.

Erfindungsgemäß ist dazu zumindest ein Dreikammersystem vorgesehen, welches zum einen eine Zuführkammer zum Zuführen des Behandlungsgases (Heiz- oder Kühlgases), eine Verteilkammer, von der das Gas letztlich in Richtung der fortbewegten Materialbahn mit dazu quergerichteter Komponente austritt, und eine zwischen der Zuführ- und der Verteilkammer angeordnete weitere Kammer, vorzugsweise in Form einer Druckausgleichskammer, umfaßt.

Die zumindest eine weitere Kammer dient zum Druckausgleich des über die Zuführkammer zugeführten Gases. In der Verteilkammer kann dann letztlich der dynamische Druck des Gas- oder Luftstomes in Staudruck umgewandelt werden, der zur weiteren Druckvergleichmäßigung führt, worüber ein gleichmäßiges Verteilen des Gasstromes auf die Ausströmöffnungen ermöglicht wird.

In einer besonders bevorzugten Ausführungsform der Erfindung ist vorgesehen, daß die Übertrittsöffnungen von einer Kammer zur nächsten Kammer jeweils so angeordnet sind, daß die Ebene der Öffnungsrichtungen und damit die Strömrichtungen des Gases durch diese Öffnungen hindurch gegenüber den Übertrittsöffnungen am Übergang zur nächsten Kammer bzw. zu der Ausrichtung der Auströmöffnungen - worüber das Behandlungsgas in Richtung Materialbahn austritt - jeweils quer zueinander ausgerichtet sind, d.h. vorzugsweise senkrecht oder im wesentlichen senkrecht zueinander ausgerichtet sind. Dadurch wird der Gasstrom jeweils bei Übergang von der Zuführkammer zur Druckausgleichskammer, von der Druckausgleichskammer zur Verteilkammer und von der Verteilkammer über die Ausströmöffnungen in Richtung der zu behandelnden Materialbahn umgelenkt, wodurch sich eine hochgradig gleichmäßige Gasaustrittsgeschwindigkeit aus dem Düsenkasten sowie eine hochgradig gleichmäßige Verteilung des zugeführten Heißgasstromes über die gesamte Breite der fortbewegten Materialbahn erzielen läßt.

Insgesamt lassen sich also insbesondere bei Verwirklichung bevorzugter Ausführungsformen folgende Vorteile erzielen:

- Eine gleichmäßige Verteilung des zugeführten Gasstromes über die gesamte Breite der zu behandelnden Materialbahn bzw. die gesamte Belüftungsdüse.

- Eine gleichmäßige Gasaustrittsgeschwindigkeit aus dem Düsenkasten in den umgebenden Wirkraum.

- Eine gleichbleibende Verteilungsgüte der Belüftungsdüse bzw. des Düsenkastens bezüglich der Gasaustrittsgeschwindigkeit bei unterschiedlichen Volumenströmen mit Abweichungen besser als
  $\pm 4\%$ bei $V_{max}$
  $\pm 10\%$ bei $V_{min}$

wobei

$$\frac{V_{max}}{V_{min}} \geq \frac{4}{1}$$

ist.

- Ein gleichmäßigerer Wärmeübergangs-Koeffizient zwischen Düsenkasten und Wirkfläche außerhalb des Düsenkastens (wobei für die Ausströmöffnungen zur Materialbahn die Parameter Öffnungsgröße, Öffnungsteilung und Abstand zwischen der Materialbahn zu den Ausströmöffnungen der Luftdüse optimal aufeinander abgestimmt werden können).

- Ein geringer Druckverlust zwischen einem der Belüftungsdüse vorgeschalteten Ventilator und den Austrittsöffnungen der Belüftungsdüse (des Düsenkastens); weitere Verbesserungen können dann noch erzielt werden, die Flächenverhältnisse der Kanalquerschnitte und Kammerquerschnitte aufeinander abgestimmt werden und wenn in sonstiger Weise noch die Kammergeometrien strömungsgünstig gestaltet werden.

- Eine hochgradige Unempfindlichkeit der Belüftungsdüse gegenüber veränderten Arbeitstemperaturen.

- Die Sicherstellung eines möglichst senkrechten Auftreffens des Behandlungsmediums auf die zu behandelnde Materialbahn.

- Die Düsengeometrie kann für unterschiedlich lange Düsenkästen, auch für Öfen, verwendet werden, d. h. insbesondere für Ofenkonstruktionen mit verschiedener Arbeitsbreite. Eine Veränderung des Düsendesigns ist bei unterschiedlicher Ofenbreite bzw. unterschiedlicher Materialbahnbreite nicht notwendig.

- Geringe Herstellkosten für die Belüftungsdüse.

Die Erfindung wird nachfolgend anhand eines Ausführungsbeispieles näher erläutert.

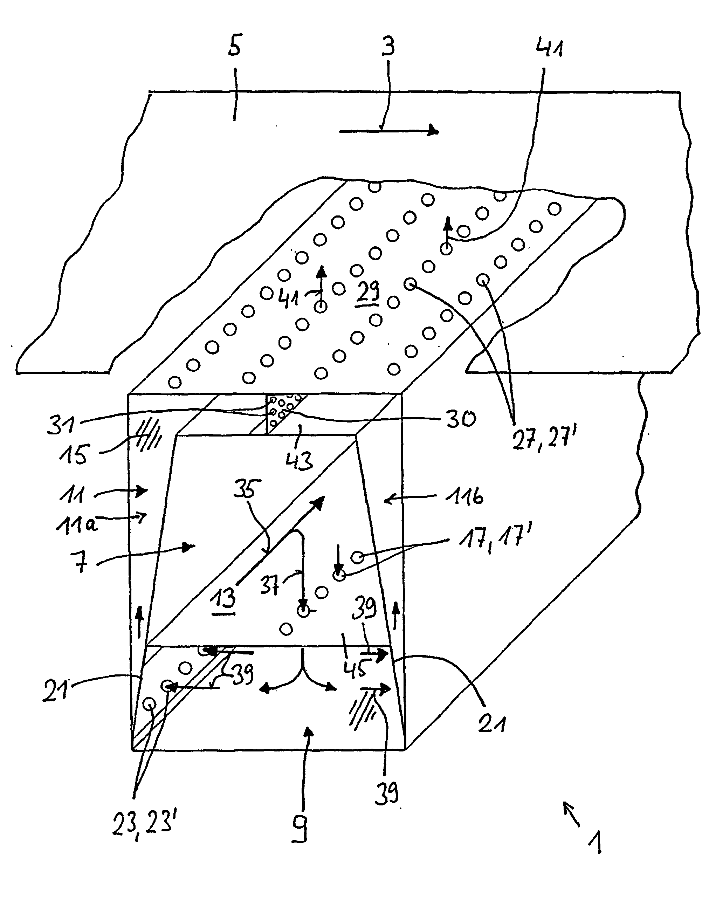

In der Zeichnung ist in schematischer perspektivischer Darstellung eine Belüftungsdüse mit einem Düsenkasten 1 gezeigt, der sich mit seiner Längsrichtung quer zur Abzugsrichtung 3 einer Materialbahn 5 erstreckt. Die Materialbahn 5 besteht im gezeigten Ausführungsbeispiel aus einem Kunststoffilm, der beispielsweise in einer Reck-Anlage einer Längs- und/oder Querreckung unterzogen wird. In der perspektivischen Darstellung gemäß der beigefügten Figur ist der Düsenkasten 1 lediglich ausschnittsweise gezeigt. Die Materialbahn ist mit Ausbrechungen versehen, um den Düsenkasten unterhalb der Materialbahn besser darzustellen. Die tatsächlichen Folienbreiten können deutlich breiter sein als die Dimensionsangaben gemäß der beigefügten Zeichnung vermuten lassen.

In dem Düsenkasten kann ein gasförmiges Behandlungsmedium, in der Regel Luft, z. B. zum Aufheizen oder Abkühlen der Folie zugeführt werden. Insoweit wird nachfolgend auch teilweise von Heiß- oder Kühlgas gesprochen.

Der Düsenkasten 1 weist im gezeigten Ausführungsbeispiel einen rechteckförmigen Querschnitt quer zu dessen Längserstreckung auf. Er umfaßt vom Prinzip her ein Mehr-Kammersystem, im gezeigten Ausführungsbeispiel eine erste Kammer 7, eine zweite Kammer 9 und eine dritte Kammer 11, die nachfolgend auch als Zuführkammer 7, Druckausgleichskammer 9 bzw. Verteilkammer 11 bezeichnet werden.

Der Düsenkasten 1 weist lediglich an seiner in der Zeichnung dargestellten einen Stirnseite eine Zuführöffnung 13 auf, die eine Verbindung zur Zuführkammer 7 schafft. Mit anderen Worten ist die aus der Zeichnung ersichtliche Stirnseite, d.h. die Stirnwände der Druckausgleichkammer 2 und der Verteilerkammer 3 durch eine Stirnwand 15 verschlossen.

Die gegenüberliegende in der Zeichnung nicht näher dargestellte weitere Stirnwand auf der anderen Breitseite der Materialbahn 5 ist verschlossen, so daß das Gas oder Behandlungsmedium lediglich einseitig über eine stirnseitige Zuführöffnung 13 zugeführt wird, was bautechnische Vorteile aufweist.

In Längsrichtung des Düsenkastens 1 und damit in quer zur Abzugsrichtung 3, d.h. in der Regel senkrecht zur Abzugsrichtung 3, ist zumindest eine Überström-Öffnungsanordnung 17 vorgesehen, die im gezeigten Ausführungsbeispiel aus einer Vielzahl von längs einer quer zur Abzugsrichtung 3 angeordneten Linie vorgesehenen Überström-Öffnungen 17' bestehen.

Über diese Überström-Öffnungsanordnung 17 kann das zugeführte Gas von der Zuführkammer 7 über die gesamte Länge der Zuführkammer in die Druckausgleichskammer 9 strömen.

An zwei gegenüberliegenden Druckausgleichs-Kammerwänden 21 sind ebenfalls jeweils zumindest eine Überström-Öffnungsanordnung 23 mit im gezeigten Ausführungsbeispiel einer Vielzahl von hintereinander angeordneten und damit quer zur Abzugsrichtung 3 verlaufenden Überström-Öffnungen 23' gegenüberliegend vorgesehen, worüber das Gas von der Druckausgleichskammer 9 in die Verteilkammer 11 überströmen kann.

Schließlich kann über eine Ausström-Öffnungsanordnung 27 das Gas mit Querkomponente, d. h. im wesentlichen mit senkrecht zur Materialbahn 5 gerichteter Komponente in Richtung der Materialbahn 5 austreten. Die Austritts-Öffnungsanordnungen 27 sind in einer materialbahnseitigen Kastenwand 29 vorgesehen und bestehen im gezeigten Ausführungsbeispiel aus einer Vielzahl von in Längs- und Querrichtung auf der Kastenwand 29 versetzt zueinander angeordneten Austrittsöffnungen 27'.

Schließlich ist im gezeigten Ausführungsbeispiel die Zuführkammer 7 im mittleren Bereich des Düsenkastens 1 angeordnet, wobei sich die Verteilkammer 3 in räumlicher Anordnung an der zur Materialbahn 5 abliegenden Seite an die Zuführkammer 7 anschließt.

Die Verteilkammer 11 umgreift im gezeigten Ausführungsbeispiel die mittig angeordnete Zuführkammer 7 und im abgewandt zur Materialbahn 5 liegenden Bereich zumindest teilweise auch die Druckausgleichskammer 9.

Ferner ist im Ausführungsbeispiel gezeigt, daß die Verteilkammer 11 grundsätzlich zweigegliedert oder zweigeteilt sein kann, nämlich mittels einer Trennungswand 30, die in Längsrichtung des Düsenkastens 1 bevorzugt in einer vertikalen Mittel-Längsebene senkrecht zur Materialbahn 5 liegt. In dieser Trennungswand sind aber ferner auch noch Ausgleichsöffnungen 31 vorgesehen, damit es gegebenenfalls zu einem Druckausgleich in den beiden Teilen 11a und 11b der Verteilkammer 11 kommt.

Die Anordnung ist dabei derart, daß beispielsweise Heiß- oder Kühlgas - in der Regel Heiß- oder Kühlluft - von einem Ventilator kommend der Zuführöffnung 13 und damit der Zuführkammer 7 zugeführt wird. Da die drei Kammern der Belüftungsdüse sich praktisch über die gesamte Länge der Belüftungsdüse, d.h. über die gesamte Breite der zu behandelnden Materialbahn, erstreckt, tritt das Behandlungsgas über die gesamte Länge der Zuführkammer, d.h. über die gesamte Längserstreckung der Überström-Öffnungsanordnung 17, von der Zuführkammer 1 in die Druckausgleichskammer 9 über. Der Gasstrom wird also über diese Überström-Öffnungsanordnung 17 umgelenkt und über die gesamte Düsenkastenlänge gleichförmig dosiert. Dabei ist die Strömungsrichtung 37 durch die Überström-Öffnungsanordnung 17 quer, d.h. senkrecht oder im wesentlichen senkrecht (d.h. in einem Winkel von 90° ± ≤ 45°, insbesondere 90° ± ≤ 30° oder 90° + ≤ 15° zur Strömungsrichtung 35 in der Zuführkammer 7, wobei die Strömungsrichtung 35 in Längsrichtung und damit quer (senkrecht) zur Abzugsrichtung 3 der Materialbahn 5 verläuft.

In der Druckausgleichskammer 9 wird dann ein Druckausgleich über die gesamte Düsenkastenlänge ermöglicht.

Über die nachfolgende Überström-Öffnungsanordnung 23 kann dann das Gas in die Verteilkammer 11 überströmen, wobei der dynamische Druck des Gasstromes in Staudruck umgewandelt wird. Dabei wird eine weitere Druckvergleichmäßigung und ein gleichmäßiges Verteilen des Gasstromes auf die Ausstromöffnungen 27' erzielt.

Die Überström-Öffnungsanordung 23 ist ebenfalls wieder so angeordnet, daß die Strömungsrichtung 39 durch diese zweite Überström-Öffnungsanordnung 23 wiederum quer, d.h. im wesentlichen senkrecht zur ersten Strömungsrichtung 35 beim Übertritt des Gasstromes von der Zuführkammer 7 zur Druckausgleichskammer 9, aber auch im wesentlichen quer zu der Strömungsrichtung 37 zu liegen kommt. Der Winkel der Strömungsrichtung 39 soll dabei ebenfalls wieder in etwa 90° ± ≤ 45°, insbesondere 90° ± ≤ 30° oder 90° ± ≤ 15° zur Strömungsrichtung 35 und/oder 37 betragen.

Über die Ausströmöffnungen 27 wird dann der Staudruck in der Verteilkammer 11 in dynamischen Druck in den Ausflußöffnungen 27' der Verteilkammer umgewandelt.

Die Strömrichtung 41 beim Austritt durch die Ausströmöffnungen 27' ist dabei ebenfalls wieder im wesentlichen senkrecht zu den vorausgehenden Strömrichtungen 35, 37 und/oder 39. Auch hier können die Winkelabweichungen zur Senkrechten 90° ± ≤ 45°, insbesondere 90° ± ≤ 0° oder 90° ± ≤ 15° betragen.

Die Verteilungsgüte des Düsenkastens bzw. der Gasaustrittsgeschwindigkeit bei unterschiedlichen Volumenströmen kann auch dadurch weiter verbessert werden, wenn die einhzeln erwähnten Überström-Öffnungsanordnungen 17, 23 und die Ausströmöffnungen 27' aus Löchern, insbesondere aus Rundlöchern bestehen, die beispielsweise gestanzt werden können. Dadurch lassen sich nicht nur geringe Fertigungstoleranzen erzielen, sondern die Lochteilung kann zudem sehr genau ausgeführt werden.

Ein besonders geringer Druckverlust in der Belüftungsdüse zwischen Ventilator und Ausgangsöffnung des Düsenkastens kann dadurch erzielt werden, daß die Flächenverhältnisse der Kanalquerschnitte und der Kammerquerschnitte aufeinander abgestimmt werden. Dadurch lassen sich auch die Kammergeometrien strömungsgünstig gestalten.

Vor allem ist der erläuterte Düsenkasten hochgradig unempfindlich gegenüber veränderten Arbeitstemperaturen.

Aus der Querschnittsdarstellung des Düsenkastens 1 ist auch ersichtlich, daß das Außengehäuse aus einem im Querschnitt rechteckförmigen Düsenkasten besteht. Die Zuführkammer 7 und die Druckausgleichkammer 9 weisen eine gemeinsame, beispielsweise aus Blech bestehende und die beiden gegenüberliegenden Seiten 21 umfassende Gehäusewand auf. Es kann sich dabei um entsprechend gekantetes Blech handeln, welches im Querschnitt nach Art eines umgekehrten U gestaltet ist. Die beiden Seitenwände 21 sind also über einen oberen, sich aber innerhalb des Düsenkastens 1 befindenden Verbindungsabschnitt 43 verbunden. Lediglich die unteren Enden der Seitenwände 21 sind innenliegend an den Seitenwänden des Düsenkastens 1 luftdicht angebracht.

Lediglich ein Zwischenblech 45, in welchem die ÜberströmÖffnungen 17' angeordnet sind, dient als Trennungsblech zwischen dem Zuführkanal 7 und dem Verbindungskanal 9, wobei dieses Trennblech 45 ebenfalls mit entsprechenden Flanschabschnitten innenliegend an den gegenüberliegenden Seitenwänden 21 luftdicht befestigt ist.

Zur Erzielung einer ausreichenden Stabilität dient dann schließlich die erwähnte Trennwand 30, die sich zwischen dem oberen Verbindungsabschnitt 43 des Zuführkanals und der Innenseite der materialbahnseitigen Kastenwand 29 erstreckt und über entsprechende im gezeigten Ausführungsbeispiel gegensinnig hervorragende Flanschabschnitte an dem Verbindungsabschnitt 43 bzw. an der Kastenwand 29 befestigt ist.

Abweichend vom gezeigten Ausführungsbeispiel könnte die räumliche Reihenfolge der Kammer auch insoweit abweichend sein, als die Zuführkammer 7 am weitesten von den Austrittsöffnungen 27' entfernt liegt, und sich daran in Richtung Materialbahn 5 die Druckausgleichskammer 9 und dann die Verteilkammer 11 anschließt.

Schließlich kann auch ein Kammersystem verwendet werden, das mehr als insgesamt drei Kammern umfaßt, bei denen also nicht nur eine Druckausgleichskammer, sondern beispielsweise zwei nacheinander geschaltete Druckausgleichskammern 9 oder mehr mit entsprechenden Überström-Öffnungsanordnungen zwischen den Druckausgleichskammern vorgesehen sind.

**Patentansprüche**

1. Belüftungsdüse, insbesondere zur Erwärmung oder zum Kühlen von bahnförmigen Materialien, wobei sich die Belüftungsdüse in Betriebsstellung mit ihrer Längsrichtung quer zur Abzugsrichtung der Materialbahn (5) erstreckt, mit einer Zuführkammer (7) zur Versorgung der Belüftungsdüse mit Behandlungsgas und mit einer sich quer zur Materialbahn (5) erstreckenden und mit der Zuführkammer (7) über zumindest eine Überström-Öffnungsanordnung in Verbindung stehenden Verteilkammer (11), von der aus das Behandlungsgas mit quer zur Materialbahn (5) verlaufender Strömungsrichtung (35) über eine Ausström-Öffnungsanordnung (27) über die Breite der Materialbahn (5) hinweg ausströmen kann, **dadurch gekennzeichnet, daß** zwischen der Zuführkammer (7) und der Verteilkammer (11) zumindest eine weitere Kammer (9) vorgesehen ist, so daß das Behandlungsgas von der Zuführkammer (7) über zwischen der Zuführkammer (7) und der zumindest einen weiteren Kammer (9) vorgesehene Überström-Öffnungsanordnung (17) und von der weiteren Kammer (9) über eine weitere Überström-Öffnungsanordnung (23) in die Verteilkammer (11) zur Weiterleitung an die Austrittsöffnungs-Anordnung (27) strömen kann.

2. Belüftungsdüse nach Anspruch 1, **dadurch gekennzeichnet, daß** die Überström-Öffnungsanordnungen (17, 23) sich über die gesamte Breite der Materialbahn (5) und/oder im wesentlichen über die Gesamtlänge der Belüftungsdüse erstrecken.

3. Belüftungsdüse nach Anspruch 1 oder 2, **dadurch gekennzeichnet, daß** die Überström-Öffnungsanordnung (17, 23) aus einer oder mehreren Schlitzausnehmungen besteht.

4. Belüftungsdüse nach Anspruch 1 oder 2, **dadurch gekennzeichnet, daß** die Überström-Öffnungsanordnung (17, 23) aus einer Vielzahl von Löchern, insbesondere Rundlöchern besteht.

5. Belüftungsdüse nach Anspruch 4, **dadurch gekennzeichnet, daß** die Vielzahl der Rundlöcher jeweils auf einer oder mehreren in Längsrichtung der Belüftungsdüse verlaufenden Linien versetzt zueinander angeordnet sind.

6. Belüftungsdüse nach einem der Ansprüche 1 bis 5, **dadurch gekennzeichnet, daß** die Belüftungsdüse lediglich an einer der beiden Stirnseiten mit einer Zuführöffnung (13) versehen ist, worüber Behandlungsgas der Zuführkammer (7) zuführbar ist.

7. Belüftungsdüse nach einem der Ansprüche 1 bis 6, **dadurch gekennzeichnet, daß** die Ausrichtung der Überström-Öffnungsanordnung (17, 17') und damit die Strömrichtung (37) von der Zuführkammer (7) in die weitere Kammer (9) quer zu der Strömungsrichtung (35) verläuft, längs der das Behandlungsgas in der Zuführkammer (7) strömt.

8. Belüftungsdüse nach einem der Ansprüche 1 bis 7, **dadurch gekennzeichnet, daß** die Ausrichtung der Überström-Öffnungsanordnung (23, 23') und damit die Strömrichtung (39) von der weiteren Kammer (9) zu der Verteilkammer (11) quer zu der Strömungsrichtung (35) verläuft, längs der das Behandlungsgas in der Zuführkammer (7) strömt.

9. Belüftungsdüse nach einem der Ansprüche 1 bis 8, **dadurch gekennzeichnet, daß** die Ausrichtung der Ausström-Öffnungsanordnung (27, 27') und damit die Strömrichtung (41) aus der Verteilkammer (11) quer zu der Strömungsrichtung (39) von der weiteren Kammer (9) in die Verteilkammer (11) verläuft.

10. Belüftungsdüse nach zumindest einem der Ansprüche 7 bis 9, **dadurch gekennzeichnet, daß** die zu der Strömungsrichtung (35) in Längsrichtung der Zuführkammer (7) nachfolgenden Strömungsrichtungen (37, 39, 41) durch die nachfolgenden Überström-Öffnungsanordnungen (17, 23) bzw. die Ausström-Öffnungsanordnung (27) jeweils quer zueinander ausgerichtet sind, d.h. vorzugsweise einen Winkel von 90° $\pm \leq$ 45° betragen.

11. Belüftungsdüse nach einem der Ansprüche 1 bis 10, **dadurch gekennzeichnet, daß** die Verteilkammer (11) zweigegliedert ist, wobei eine den ersten Teil (11a) und den zweiten Teil (11b) der Verteilkammer (11) trennende Trennungswand (30) senkrecht zur der die Ausström-Öffnungsanordnung (27) aufweisenden Kastenwand (29) der Belüftungsdüse ausgerichtet ist.

12. Belüftungsdüse nach Anspruch 11, **dadurch gekennzeichnet, daß** die Trennwand (31) mit Ausgleichsöffnungen (31) versehen ist.

13. Belüftungsdüse nach einem der Ansprüche 1 bis 12, **dadurch gekennzeichnet, daß** die Verteilkammer (11) die Zuführkammer (7) und/oder die weitere Kammer (9) zumindest teilweise und/oder in einer Teilhöhe in Querschnittsdarstellung senkrecht zur Längsrichtung des Düsenkastens (1) übergreift.

14. Belüftungsdüse nach einem der Ansprüche 1 bis 13, **dadurch gekennzeichnet, daß** die Überström-Öffnungsanordnung (23) zwischen der weiteren Kammer (7) und der Verteilkammer (11) an zwei in Abzugsrichtung (3) der Materialbahn (5) versetzt liegenden und sich quer zur Materialbahn erstreckenden Kammerwänden (21) vorgesehen sind.

15. Belüftungsdüse nach einem der Ansprüche 1 bis 14, **dadurch gekennzeichnet, daß** die weitere Kammer (9) in geometrischer Hinsicht auf der zu der Austrittsöffnungs-Anordnung (27) abgewandt liegenden Seite der Zuführkammer (7) angeordnet ist.

16. Belüftungsdüse nach einem der Ansprüche 1 bis 15, **dadurch gekennzeichnet, daß** die weitere Kammer (9) in geometrischer Hinsicht auf der zu der Austrittsöffnungs-Anordnung (27) zugewandt liegenden Seite der Zuführkammer (7) angeordnet ist.

17. Belüftungsdüse nach einem der Ansprüche 1 bis 16, **dadurch gekennzeichnet, daß** der Düsenkasten (1) im Querschnitt quer zur Längsrichtung der Belüftungsdüse eine zumindest die Zuführkammer (7) und die weitere Kammer (9) umfassende Kammergestaltung mit von der Austritts-Öffnungsanordnung (27) zumindest teilweise divergierenden Seitenwänden umfaßt.

18. Belüftungsdüse nach einem der Ansprüche 1 bis 17, **dadurch gekennzeichnet, daß** die weitere Kammer (9) eine Druckausgleichskammer ist.

**Claims**

1. Blower nozzle, in particular for heating or cooling web-like materials, the blower nozzle, in the operating position, extending with its longitudinal direction transversely to the take-off direction of the material web (5), having a supply chamber (7) for supplying the blower nozzle with treatment gas, and having a distribution chamber (11) which extends transversely to the material web (5), is connected to the supply chamber (7) via at least one overflow aperture arrangement, and from which the treatment gas can flow out, with a flow direction (35) running transversely to the material web (5), via an outlet aperture arrangement (27) over the width of the material web (5), **characterized in that** at least one further chamber (9) is provided between the supply chamber (7) and the distribution chamber (11), with the result that the treatment gas can flow from the supply chamber (7) via [lacuna] overflow aperture arrangement (17), provided between the supply chamber (7) and the at least one further chamber (9), and from the further chamber (9) via a further overflow aperture arrangement (23), into the distribution chamber (11) for further conduction to the outlet aperture arrangement (27).

2. Blower nozzle according to Claim 1, **characterized in that** the overflow aperture arrangements (17, 23) extend over the entire width of the material web (5) and/or essentially over the entire length of the blower nozzle.

3. Blower nozzle according to Claim 1 or 2, **characterized in that** the overflow aperture arrangement (17, 23) consists of one or more slotted recesses.

4. Blower nozzle according to Claim 1 or 2, **characterized in that** the overflow aperture arrangement (17,23) consists of a multiplicity of holes, in particular round holes.

5. Blower nozzle according to Claim 4, **characterized in that** the multiplicity of round holes are in each case arranged on one or more lines, running in the longitudinal direction of the blower nozzle, in a manner such that they are offset from one another.

6. Blower nozzle according to one of Claims 1 to 5, **characterized in that** the blower nozzle is provided with a supply aperture (13) only on one of the two end sides, via which aperture treatment gas can be supplied to the supply chamber (7).

7. Blower nozzle according to one of Claims 1 to 6, **characterized in that** the alignment of the overflow aperture arrangement (17, 17'), and hence the flow direction (37) from the supply chamber (7) into the further chamber (9), runs transversely to the flow direction (35) along which the treatment gas flows in the supply chamber (7).

8. Blower nozzle according to one of Claims 1 to 7, **characterized in that** the alignment of the overflow aperture arrangement (23, 23'), and hence the flow direction (39) from the further chamber (9) to the distribution chamber (11), runs transversely to the flow direction (35) along which the treatment gas flows in the supply chamber (7).

9. Blower nozzle according to one of Claims 1 to 8, **characterized in that** the alignment of the outlet aperture arrangement (27, 27'), and hence the flow direction (41) out of the distribution chamber (11), runs transversely to the flow direction (39) from the further chamber (9) into the distribution chamber (11).

10. Blower nozzle according to at least one of Claims 7 to 9, **characterized in that** the flow directions (37, 39, 41) which are subsequent to the flow direction (35) in the longitudinal direction of the supply chamber (7), through the subsequent overflow aperture arrangement (17, 23) and the outlet aperture arrangement (27), respectively, are in each case aligned transversely to one another, i.e. preferably amount to an angle of 90° ± ≤ 45°.

11. Blower nozzle according to one of Claims 1 to 10, **characterized in that** the distribution chamber (11) is divided into two, a partition (30) which separates the first part (11a) and the second part (11b) of the distribution chamber (11) being aligned perpendicularly to the box wall (29), containing the outlet aperture arrangement (27), of the blower nozzle.

12. Blower nozzle according to Claim 11, **characterized in that** the partition (31) [sic] is provided with compensation apertures (31).

13. Blower nozzle according to one of Claims 1 to 12, **characterized in that** the distribution chamber (11) overlaps the supply chamber (7) and/or the further chamber (9) at least partially and/or over a partial height perpendicularly to the longitudinal direction of the nozzle box (1) in the cross-sectional representation.

14. Blower nozzle according to one of Claims 1 to 13, **characterized in that** the overflow aperture arrangement (23) between the further chamber (7) [sic] and the distribution chamber (11) are [sic] provided on two chamber walls (21) which are offset in the take-off direction (3) of the material web (5) and extend transversely to the material web.

15. Blower nozzle according to one of Claims 1 to 14, **characterized in that** the further chamber (9) is arranged geometrically on that side of the supply chamber (7) which faces away from the outlet aperture arrangement (27).

16. Blower nozzle according to one of Claims 1 to 15, **characterized in that** the further chamber (9) is arranged geometrically on that side of the supply chamber (7) which faces the outlet aperture arrangement (27).

17. Blower nozzle according to one of Claims 1 to 16, **characterized in that** the nozzle box (1), in cross section transversely to the longitudinal direction of the blower nozzle, comprises a chamber design which encompasses at least the supply chamber (7) and the further chamber (9) and has side walls which at least partially diverge from the outlet aperture arrangement (27).

18. Blower nozzle according to one of Claims 1 to 17, **characterized in that** the further chamber (9) is a pressure compensation chamber.

## Revendications

1. Buse de ventilation, en particulier pour chauffer ou pour refroidir des matériaux en forme de bande, la buse de ventilation s'étendant, en position de fonctionnement, avec sa direction longitudinale perpendiculairement à la direction d'enlèvement de la bande de matériau (5), comportant une chambre d'alimentation (7) pour alimenter la buse de ventilation en gaz de traitement et comportant une chambre de distribution (11) qui s'étend perpendiculairement à la bande de matériau (5) et qui est en liaison avec la chambre d'alimentation (7) via au moins un agencement d'ouverture de transfert et à partir de laquelle le gaz de traitement peut s'écouler avec une direction d'écoulement (35) perpendiculaire à la bande de matériau (5) via un agencement d'ouverture de sortie (27) au-delà de la largeur de la bande de matériau (5), **caractérisée en ce qu'**il est prévu au moins une autre chambre (9) entre la chambre d'alimentation (7) et la chambre de distribution (11), de sorte que le gaz de traitement peut s'écouler depuis la chambre d'alimentation (7) via l'agencement d'ouverture de transfert (17) prévu entre la chambre d'alimentation (7) et ladite au moins une autre chambre (9) et depuis l'autre chambre (9) via un autre agencement d'ouverture de transfert (23) jusque dans la chambre de distribution (11) pour la transmission à l'agencement d'ouverture de sortie (27).

2. Buse de ventilation selon la revendication 1, **caractérisée en ce que** les agencements d'ouverture de transfert (17, 23) s'étendent sur toute la largeur de la bande de matériau (5) et/ou sensiblement sur toute la longueur de la buse de ventilation.

3. Buse de ventilation selon l'une ou l'autre des revendications 1 et 2, **caractérisée en ce que** l'agencement d'ouverture de transfert (17, 23) est constitué par un ou par plusieurs évidements en forme de fente.

4. Buse de ventilation selon l'une ou l'autre des revendications 1 et 2, **caractérisée en ce que** l'agencement d'ouverture de transfert (17, 23) est constitué par une multitude de trous, en particulier de trous circulaires.

**5.** Buse de ventilation selon la revendication 4, **caractérisée en ce que** la multitude de trous circulaires sont ménagés en décalage mutuel sur une ou sur plusieurs lignes respectives s'étendant en direction longitudinale de la buse de ventilation.

**6.** Buse de ventilation selon l'une des revendications 1 à 5, **caractérisée en ce que** la buse de ventilation est pourvue d'une ouverture d'alimentation (13) uniquement sur l'une des deux faces frontales, via laquelle le gaz de traitement peut être amené à la chambre d'alimentation (7).

**7.** Buse de ventilation selon l'une des revendications 1 à 6, **caractérisée en ce que** l'orientation de l'agencement d'ouverture de transfert (17, 17') et ainsi la direction d'écoulement (37) depuis la chambre d'alimentation (7) vers l'autre chambre (9) s'étendent perpendiculairement à la direction d'écoulement (35) le long de laquelle le gaz de traitement s'écoule dans la chambre d'alimentation (7).

**8.** Buse de ventilation selon l'une des revendications 1 à 7, **caractérisée en ce que** l'orientation de l'agencement d'ouverture de transfert (23, 23') et ainsi la direction d'écoulement (39) depuis l'autre chambre (9) vers la chambre de distribution (11) s'étendent perpendiculairement à la direction d'écoulement (35) le long de laquelle le gaz de traitement s'écoule dans la chambre d'alimentation (7).

**9.** Buse de ventilation selon l'une des revendications 1 à 8, **caractérisée en ce que** l'orientation de l'agencement d'ouverture de sortie (27, 27') et ainsi la direction d'écoulement (41) depuis la chambre de distribution (11) s'étendent perpendiculairement à la direction d'écoulement (39) depuis l'autre chambre (9) jusque dans la chambre de distribution (11).

**10.** Buse de ventilation selon l'une des revendications 7 à 9, **caractérisée en ce que** les directions d'écoulement (37, 39, 41) à suite de la direction d'écoulement (35) en direction longitudinale de la chambre d'alimentation (7) à travers les agencements d'ouverture de transfert suivants (17, 23) ou à travers l'agencement d'ouverture de sortie (27) sont orientées chacune perpendiculairement les unes aux autres, c'est-à-dire qu'elles s'élèvent de préférence à un angle de 90° ± 45°.

**11.** Buse de ventilation selon l'une des revendications 1 à 10, **caractérisée en ce que** la chambre de distribution (11) est subdivisée en deux parties, une paroi de séparation (30) séparant la première partie (11a) et la deuxième partie (11b) de la chambre de distribution (11) étant orientée perpendiculairement à la paroi de caisson (29), présentant l'agencement d'ouverture de sortie (27), de la buse de ventilation.

**12.** Buse de ventilation selon la revendication 11, **caractérisée en ce que** la paroi de séparation (30) est pourvue d'ouvertures de compensation (31).

**13.** Buse de ventilation selon l'une des revendications 1 à 12, **caractérisée en ce que** la chambre de distribution (11) coiffe au moins partiellement la chambre d'alimentation (7) et/ou l'autre chambre (9), et/ou à une hauteur partielle en illustration en section perpendiculairement à la direction longitudinale du caisson de buse (1).

**14.** Buse de ventilation selon l'une des revendications 1 à 13, **caractérisée en ce que** l'agencement d'ouverture de transfert (23) entre l'autre chambre (9) et la chambre de distribution (11) est prévu sur deux parois de chambre (21) qui sont situées en décalage en direction d'enlèvement (3) de la bande de matériau (5) et qui s'étendent perpendiculairement à la bande de matériau.

**15.** Buse de ventilation selon l'une des revendications 1 à 14, **caractérisée en ce que** l'autre chambre (9) est agencée, en vue géométrique, sur le côté de la chambre d'alimentation (7) détourné de l'agencement d'ouverture de sortie (27).

**16.** Buse de ventilation selon l'une des revendications 1 à 15, **caractérisée en ce que** l'autre chambre (9) est agencée, en vue géométrique, sur le côté de la chambre d'alimentation (7) tourné vers l'agencement d'ouverture de sortie (27).

**17.** Buse de ventilation selon l'une des revendications 1 à 16, **caractérisée en ce que** le caisson de buse (1) comprend, en section perpendiculairement à la direction longitudinale de la buse d'alimentation, une configuration de chambres qui comprend au moins la chambre d'alimentation (7) et l'autre chambre (9) et dont les parois latérales divergent au moins partiellement depuis l'agencement d'ouverture de sortie (27).

**18.** Buse de ventilation selon l'une des revendications 1 à 17, **caractérisée en ce que** l'autre chambre (9) est une chambre d'équilibrage de pression.